# EUROPEAN PATENT SPECIFICATION

(11) **EP 0 357 048 B1**
(45) Date of publication and mention of the grant of the patent: **28.09.1994**
(21) Application number: 89116023.6
(22) Date of filing: 30.08.1989
(51) Int. Cl.: C07B 39/00, C07F 9/146, C07F 9/6574

(54) **Process for transhalogenating a halophosphorus compound with hydrogen fluoride**
Verfahren zur Transhalogenierung einer Halogenphosphor-Verbindung mit Fluorwasserstoff
Procédé de transhalogénation d'un composé halophosphoré par le fluorure d'hydrogène

(30) Priority: 01.09.1988 US 239409
(43) Date of publication of application: 07.03.1990
(73) Proprietor: ALBEMARLE CORPORATION, Richmond, Virginia 23219 (US)
(72) Inventor: Burt, Edward Angus, Baton Rouge Louisiana 70817 (US); Burton, Lester Percy J., Baton Rouge Louisiana 70817 (US); Stahly, Barbara Clack, Baton Rouge Louisiana 70810 (US)
(74) Representative: Schwabe - Sandmair - Marx

(56) References cited:
- EP-A- 0 312 790
- DD-A- 258 611
- HOUBEN-WEYL, Methoden der organischen Chemie, vol. XII/1, 1963, page 247,herausgegeben von Eugen Müller et al., Georg Thieme Verlag, Stuttgart, DE; K.SASSE: "Organische Phosphor-Verbindungen"

## Description

It is known that fluorine can be exchanged for chlorine, bromine or iodine bonded to phosphorus by reaction of the halophosphorus compound with a metal fluoride. The transhalogenation reaction is quite slow and difficult to push to completion. It is sometimes desirable to replace chlorine, bromine, or iodine bonded to phosphorus with a fluorine atom. For example, L. P. J. Burton European Patent Application 0280938 describes a family of hydrocarbyl fluorophosphites that are very effective stabilizers in polyolefins, especially in combination with phenolic antioxidants, and are also hydrolytically stable. These compounds are made by first forming a hydrocarbyl chlorophosphite by reaction of an appropriate aliphatic or aromatic hydroxy compound with PCl₃ to form a mono or dichlorophosphite and then transhalogenating the chlorine atom with fluorine by reaction with a metal fluoride such as potassium fluoride.

L. P. J. Burton and M. S. Ao, in European Patent Application 0213790, disclose that the transhalogenation of a chlorine, bromine or iodine atom bonded directly to phosphorus by reaction with a fluoride salt can be sharply promoted by including in the reaction mixture a hydrogen halide salt of a pyridine-type compound.

While this constitutes an important contribution to the art by decreasing the amount of time required to complete the transhalogenation reaction, it is necessary to remove the promoter from the product of reaction at the completion of the reaction by introducing ammonia into the reaction mixture to convert the pyridine-hydrochloride catalyst to ammonium chloride and separate it from the reaction mixture as a precipitate. At the plant-size scale, this is a difficult and expensive procedure and also creates a waste disposal problem since the precipitate typically contains solvent used in the process which must be removed from the filter cake before disposal. Further, pyridine is freed from the catalytic complex by the introduction of ammonia into the reaction mixture which must be separated from the reaction product by distillation and recycled for reuse. This also adds to the cost of production. Also, the pyridine-HCl complex is corrosive of the metal equipment in which the product is made and has an objectionable odor. Another disadvantage of this method is that it employs expensive metal fluoride reactants such as potassium fluoride.

In Houben-Weyl, Methoden der Organischen Chemie, Vol. XII/1, 1963, page 267, reference is made to a publication by T. Dawson et al., in J. Org. Chemie 22, 1957, 1671 and a process relating to the halogen exchange on oxyhalids of pentavalent phosphorus with anhydrous HF is disclosed. Reference is further made to a publication by Zh. M. Ivanova in Zhurnal Obshchei Khimii, Vol. 34, No.3, 858 to 861, 1964, wherein it is mentioned that the treatment of phenyl dichlorophosphite with excess of anhydrous hydrogen fluoride leads not only to replacement of chlorine atoms by fluorine but also to cleavage of the phosphorus-oxygen bond.

Thus, a need exists for an improved transhalogenation process.

It has now been discovered that the transhalogenation of trivalent phosphorus compounds having at least one chlorine, bromine or iodine bonded directly to phosphorus with fluorine can be achieved in short reaction time (typically within 0.5 to 4 hours) without the use of a pyridine-type hydrohalide catalyst or pyridine hydrofluoride reactant and without the use of expensive metal fluoride reactants by reacting said phosphorus compounds with anhydrous hydrogen fluoride in an inert solvent in accordance with the teachings set forth herein. In conducting the process of the present invention, it is essential that hydrogen fluoride is added to the reaction mixture at a rate such that it reacts with the halogen-bound phosphorus compound as it is being introduced into the reaction mixture rather than all at once so that a substantial amount of unreacted hydrogen fluoride does not accumulate in the reaction mixture. It has been found that the presence of substantial amounts of unreacted hydrogen fluoride causes decomposition of the desired fluorophosphorus product. Further, it also is essential to the successful practice of the present invention that the anhydrous form of hydrogen fluoride is used in the process rather than aqueous hydrogen fluoride as the use of hydrofluoric acid has been found to result in the formation of unwanted decomposition products which will be discussed more fully below.

Thus, the present invention is a process for exchanging a halogen bonded to a phosphorus atom with fluorine to form a fluorophosphorus product from a phosphorus compound of formula (I) 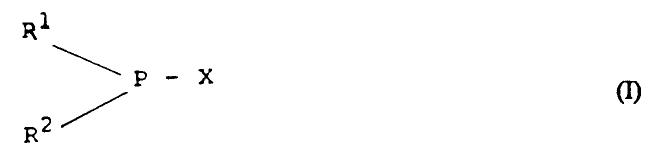
wherein
X is Cl, Br or I;
R¹ is selected from the group consisting of substituted or unsubstituted alkoxy, thioalkoxy, aryloxy, thioaryloxy, cycloalkoxy, alkenoxy and arylalkoxy; and
R² is X or is selected from the same groups as R¹ or is a group which, together with R¹, forms a substituted or unsubstituted divalent hydrocarbon group bonded at each end through oxygen or sulfur to the phosphorus atom;
wherein anhydrous hydrogen fluoride is added to a solution of compound (I) in an inert solvent at a rate such that the amount of unreacted hydrogen fluoride present in the reaction mixture does not exceed 0.2 mol per mol of compound (I).

The phosphorus-bound halogen that is exchanged with fluorine can be chlorine, bromine or iodine. The exchange is more difficult with chlorine but phosphorus-bound chlorine compounds are the most readily available. Accordingly the preferred phosphorus-bound halogen is chlorine.

The process can be conducted in a number of inert solvents. Inert solvents include aliphatic hydrocarbons such as hexane, heptane, octane, cyclohexane, and the like including mixtures thereof.

The more preferred inert solvents are the aromatic solvents which boil in the range of 80-176°C. These include benzene, toluene, xylene and mesitylene including all isomers and all mixtures of isomers and solvents.

Halogenated solvents such as carbon tetrachloride, 1,2-dichloroethane, methylenebromide, 1,1,2-trichloroethane, chlorobenzene, dichlorobenzene and the like can be used as solvents.

The amount of solvent used should be an amount that will dissolve the reactants. A useful amount is 50-500 parts by weight solvent per 100 parts of phosphorus compound.

The amount of hydrogen fluoride used in the reaction should be at least a stoichiometric amount. This is 1 equivalent of hydrogen fluoride per equivalent of phosphorus-bound halogen. Amounts less than the stoichiometric amount can be used, however, employment of amounts less than the stoichiometric amount result in depressed yields of the desired halophosphorus product. In general, use of 1-10 equivalents of hydrogen fluoride per equivalent of phosphorus bound halogen is recommended. More preferably, the amount of hydrogen fluoride is 1-5 equivalents and most preferably 1.0-1.4 equivalents per equivalent of phosphorus bound halogen.

As noted previously, Applicants have found that the use of hydrogen fluoride in other than in its anhydrous form results in the formation of decomposition products and therefore decreased yields of the desired halophosphorus reaction product. Thus, the use of aqueous hydrogen fluoride (i.e. hydrofluoric acid) as a reactant is to be avoided in the transhalogenation reaction of the present invention.

Further, Applicants have also found that it is essential to the successful practice of the present process that anhydrous hydrogen fluoride is deliberately added to the reaction mixture at a rate such that it reacts with the halogen-bound phosphorus compound essentially as it is being introduced into the reaction mixture rather than all at once so that a substantial amount of unreacted hydrogen fluoride does not accumulate in the reaction mixture. It has been found that the accumulation of substantial amounts of unreacted hydrogen fluoride in the reaction mixture can cause complete or nearly complete decomposition of the desired halophosphorus compound to occur. By substantial amounts, Applicants mean amounts of unreacted anhydrous hydrogen fluoride sufficient to cause complete or nearly complete decomposition of the desired halophosphorus product. This can readily be determined by one skilled in the art without undue experimentation by sampling the reaction mixture periodically during the course of the reaction and analyzing by gas chromotography for product decomposition as the reaction progresses.

In general, accumulated amounts of unreacted hydrogen fluoride should not exceed about 0.2 mol per mol of phosphorus compound and preferably should be less than 0.1 mol per mol of phosphorus compound and still more preferably should not exceed 0.01 mol per mol of phosphorus compound. The presence of excessive anhydrous hydrogen fluoride is readily apparent when the product undergoes substantial decomposition.

At the present time, Applicants do not fully understand that mechanism or mechanisms responsible for causing the formation of unwanted decomposition products and decreased yields of halophosphorus product when hydrofluoric acid is used in lieu of anhydrous hydrogen fluoride in the practice of the present process, or the mechanism or mechanisms responsible for causing halophosphorus product degradation when hydrogen fluoride is introduced into the reaction mixture at a rate which produces the accumulation of unreacted hydrogen fluoride in amounts sufficient to cause the halophosphorus reaction product to decompose. Applicants believe, however, that the use of aqueous hydrogen fluoride in the reaction as the fluorinating agent instead of anhydrous hydrogen fluoride causes hydrolysis of the phosphorous-bonds to occur during transhalogenation which results in the formation of unwanted decomposition products instead of the desired fluorophosphorus product. Further, Applicants believe that when hydrogen fluoride is fed into the reaction mixture at a rate faster than it can react with the halogen-bound phosphorus starting material, cleavage of the phosphorus bond contained in the fluorophosphorus product occurs causing the desired fluorophosphorus reaction product to decompose into smaller molecules. Knowledge of the mechanisms responsible for the occurrences of these events, however, is not necessary in order to obtain the unexpected benefits of the present invention.

The transhalogenation should be conducted at a temperature high enough to cause the halogen exchange to proceed but not so high as to cause undesired degradation of the reaction products. A useful temperature range is 20-300°C, more preferably 50-200°C and most preferably at the atmospheric pressure reflux temperature of the reaction mixture. Higher temperatures will of course require a sealed system under pressure.

The reaction time should be long enough to complete the reaction. The reaction is generally complete in 0.5-4 hours and in most cases in approximately 1.0-2.0 hours.

The phosphorus compounds having chlorine, bromine or iodine bonded to phosphorus can have one or two of such halogens bonded to phosphorus. The remaining group or groups bonded to phosphorus are substituted or unsubstituted hydrocarbyl, hydrocarbyloxy or hydrocarbylthio groups. Examples of such halo phosphorus compounds are methyl dichlorophosphite, ethyl dichlorophosphite, butyl dichlorophosphite, dodecyl dichlorothiophosphite, eicosyl dichlorophosphite, triacontyl dichlorophosphite, methyl dibromophosphite, propyl dibromophosphite, tetradecyl diiodophosphite, eicosyl chlorobromophosphite, triacontyl bromoiodophosphite, phenyl dichlorophosphite, phenyl dibromophosphite, phenyl diiodophosphite, benzyl dichlorophosphite, benzyl dibromophosphite, cyclohexyl dichlorophosphite, cyclohexyl dibromophosphite, cyclohexyl dichlorothiophosphite, cyclohexyl dibromodithiophosphate, dimethyl chlorophosphite, didodecyl chlorophosphite, dieicosyl bromophosphite, ditriacontyl iodophosphite, dimethyl chlorothiophosphite, dieicosyl bromodithiophosphite, diphenyl chlorophosphite, diphenyl bromophosphite, dibenzyl bromophosphite.

The starting phosphorus compounds have the structure 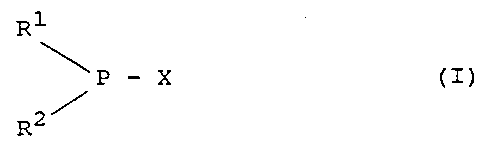
wherein X is chlorine, bromine or iodine, R¹ is selected from the group consisting of substituted and unsubstituted alkoxy, thioalkoxy, aryloxy, thioaryloxy, cycloalkoxy, alkenoxy, and arylalkoxy and R² is selected from the same group as R¹ or is X or R¹ and R² can jointly form a substituted or unsubstituted divalent hydrocarbon group bonded at each end through oxygen or sulphur to the phosphorus atom. Preferably R² is not X.

Examples of the preferred starting phosphorus compounds are dimethyl chlorophosphite, diethyl chlorophosphite, diethyl bromophosphite, dibutyl iodophosphite, dioctyl chlorophosphite, didodecyl bromophosphite, dieicosyl iodophosphite, triacontyl dichlorophosphite, butyl dibromophosphite, methyl dodecyl chlorophosphite, eicosyl dichlorophosphite, triacontyl dibromophosphite, dimethyl chlorothiophosphite, dodecyl dibromothiophosphite, dioctadecyl chlorothiophosphite, phenyl dichlorophosphite, diphenyl bromophosphite, di(4-tert-butylphenyl) chlorophosphite, di(2,4-di-tert-butylphenyl) bromophosphite, 2-isopropyl-4-methylphenyl dichlorophosphite, di(4-tert-hexyl-phenyl) chlorophosphite, diphenyl chlorothiophosphite, phenyl dibromothiophosphite, 1-naphthyl dichlorophosphite, dicyclohexyl chlorophosphite, dicyclooctyl bromophosphite, cyclododecyl dichlorophosphite, dicyclohexyl bromothiophosphite, diallyl iodophosphite, di(but-2-enyl) chlorophosphite, benzyl dichlorophosphite, dibenzyl bromophosphite, di(alpha-methylbenzyl) chlorophosphite, ethyleneglycol chlorophosphite, 2,2′-methylenebis(4,6-di-tert-butylphenyl) chlorophosphite, 2,2′-methylenebis(4-methyl-6-tert-butylphenyl) bromophosphite, 2,2′-bis(4,6-di-tert-butylphenyl) chlorophosphite, 2,2′-ethylidenebis(4,6-di-tert-butylphenyl) chlorophosphite, di(2,6-di-tert-butylphenyl) chlorophosphite, di[4-(octadecyloxycarbonylethyl)-2,6-tert-butylphenyl] chlorophosphite.

In the more preferred phosphorus compounds R¹ and R² jointly form a divalent hydrocarbon group having the structure 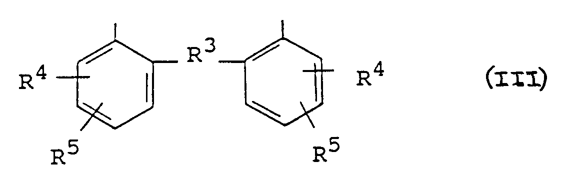
wherein R³ is a methylene or alkylidene bridge or is absent forming a direct ortho-ortho bond between the benzene rings, R⁴ and R⁵ are independently selected from alkyl groups, cycloalkyl groups and aralkyl groups and the unsubstituted bond on each benzene ring is bonded through oxygen to said phosphorus atom.

Examples of phosphorus compounds which contain the above divalent hydrocarbon group are 2,2'-methylenebis(4-methyl-6-tertbutylphenyl) chlorophosphite, 2,2'-methylenebis(4,6-di-tert-butylphenyl) bromophosphite, 2,2'-ethylidenebis(4-methyl-6-tert-butylphenyl) chlorophosphite, 2,2′-isopropylidenebis(4-methyl-6-tert-pentylphenyl) bromophosphite, 2,2′-butylidenebis(4,6-di-tertbutylphenyl) chlorophosphite, 2,2′-bis(4-methyl-6-tert-hexylphenyl) bromophosphite, 2,2′-ethylidenebis(4,6-dicyclohexylphenyl) chlorophosphite, 2,2′-methylenebis[4,6-di(alpha-methylbenzyl)phenyl] bromothiophosphite, 2,2′-ethylidenebis(4-methyl-6(alpha-methylbenzyl)phenyl) chlorophosphite, 2,2′-bis[4,6-di(alpha-methylbenzyl)phenyl] bromophosphite.

In a highly preferred embodiment the R⁴ groups are bonded at the 6,6′-positions and the R⁵ groups are bonded at the 4,4′-positions in structure III. Still more preferably both R⁴ groups are tert-alkyls having 4-12 carbon atoms and R⁵ is C₁₋₁₂ alkyl, especially a tert-alkyl of 4-12 carbon atoms.

The most preferred phosphorus compound used as a starting material is 2,2′-ethylidenebis(4,6-di-tert-butylphenyl) chlorophosphite.

The reaction is readily carried out by placing the phosphorus compound and a solvent in a stirred reaction vessel, heating to reaction temperature and adding anhydrous hydrogen fluoride to the vessel. The hydrogen fluoride is added by any convenient method. For example, it can be purged through the system or bubbled into the liquid phase using a "dip-leg". It can be added either as a liquid or a gas. Alternatively, the phosphorus compound can be exposed to hydrogen fluoride under pressure where pressures can range from 34.5 to 689.5 KPa (5-100 psig), or higher.

The product can be recovered by conventional means such as crystallization or distillation.

The following examples show how the reaction is conducted.

### Example 1

The 2,2'-ethylidenebis(4,6-di-tert-butylphenyl) chlorophosphite starting material was made by placing 400 g 2,2'-ethylidenebis(4,6-di-tert-butylphenol), 11.0 g of a poly-4-vinylpyridine cross-linked resin catalyst obtained from the Reilly Tar and Chemical Corp. identified as Reillex™ 425 polymer and 750 g of xylene in a reaction vessel. The cross-linked vinyl polymeric resin had previously been dried in a vacuum oven at 125°C overnight. The mixture was stirred and heated under nitrogen to 130°C. At 130°C, 150 g of PCl₃ was fed to the reaction mixture incrementally over a period of 4 hours while maintaining a nitrogen sweep over the reaction mixture to assist in HCl removal. At the end of 4 hours, an additional 10 g of PCl₃ was added to the reaction mixture and the reaction was continued for another 4 hours. Gas chromatography (GC) analysis showed the reaction product excluding solvent, PCl₃ and resin catalyst to be 96.8 area percent 2,2'-ethylidenebis(4,6-di-tert-butylphenyl) chlorophosphite and 3.2 area percent 2,2'-ethylidenebis(4,6-di-tert-butylphenyl) hydrogenphosphonate.

To 342 g of this reaction mixture placed in a 600 ml Monel Parr autoclave, there was added slowly 5.7 g of gaseous anhydrous hydrogen fluoride over a 2.5 hour period with stirring while maintaining the reaction temperature at approximately 95°C. A low nitrogen sweep was maintained through the reaction vessel during the last 30 minutes of the reaction to assist in HCl removal. The temperature was allowed to drop to 90°C and xylene was vacuum stripped from the reaction mixture. Isopropanol (116 g) was added to the reactor and the temperature dropped to 85°C where it was maintained for 30 minutes. The mixture was cooled to 5°C over a period of 1 hour. The resultant solid was collected by filtration. The filter cake was washed with 50 g of isopropanol and dried at 80°C under vacuum overnight. A total of 92.5 g 80% yield based on initial 2,2'-ethylidenebis-(4,6-di-tert-butylphenol), of 2,2'-ethylidenebis(4,6-di-tert-butylphenyl) fluorophosphite was obtained.

### Example 2

This example shows the effect of substituting aqueous hydrogen fluoride in the process of the present invention for anhydrous hydrogen fluoride.

The 2,2'-ethylidenebis(4,6-di-tert-butylphenyl) chlorophosphite starting material was made by heating a mixture of 400 g of 2,2'ethylidenebis(4,6-di-tert-butylphenol) and 740 g of xylene in a 2-liter glass round-bottomed flask to 80°C and thereafter adding 4 g of pyridine to the reaction mixture. The mixture was then heated to reflux (130°C) and 150 g of PCl₃ was fed to the reaction mixture over a 1 hour period of time. Gas chromatography (GC) analysis showed the reaction product excluding solvent, PCl₃ and pyridine hydrochloride to be 96.5 area percent 2,2'-ethylidenebis(4,6-di-tert-butylphenyl) chlorophosphite, 1.8 percent 2,2'-ethylidenebis(4,6-di-tert-butylphenyl) hydrogenphosphonate and 0.2 percent 2,2'-ethylidenebis(4,6-di-tert-butylphenol).

To 400 g of this reaction mixture placed in a 600 ml Monel Parr autoclave, there was added slowly 11.3 g of aqueous hydrogen fluoride (48 wt. % HF) with stirring. The resultant solution was heated to 80°C over a period of 2 hours and was maintained at this temperature for another 1 hour. GC analysis after 1 hour of reaction gave 96 area percent 2,2'-ethylidenebis(4,6-di-tert-butylphenyl) chlorophosphite (essentially no reaction). GC after 2 hours from start of reaction gave 21 area percent 2,2'-ethylidenebis(4,6-di-tert-butylphenyl) chlorophosphite, 39.8 area percent 2,2'-ethylidenebis(4,6-di-tert-butylphenyl) hydrogenphosphonate, 2.1 area percent 2,2'-ethylidenebis(4,6-di-tert-butylphenol) and only 37.0 area percent 2,2'-ethylidenebis(4,6-di-tert-butylphenyl) fluorophosphite.

### Example 3

This example shows the degradation effect of adding an excessive amount of anhydrous hydrogen fluoride reactant to the reaction mixture.

The 2,2'-ethylidenebis(4,6-di-tert-butylphenyl) chlorophosphite starting material was made by placing 150 ml of toluene into a 50 ml 4-necked round bottom flask equipped with two addition funnels, a thermometer and an overhead stirrer under nitrogen. A solution of 10 ml of PCl₃ in 50 ml of toluene was added dropwise to the flask over a 40 minute period while a solution of 47.8 g of 2,2'-ethylidenebis(4,6-di-tert-butylphenol) in 32 ml of triethylamine and 50 ml of toluene were added concurrently to the flask dropwise over a 55 minute period of time. After 1.5 hours, the slurry was heated to 40°C and maintained at this temperature for 1 hour. It was then allowed to cool to ambient temperature and stored overnight. The crude reaction mixture was then filtered and the filtrate concentrated under vacuum to 35 g of off-white solids. A 32 g portion of the solids was dissolved in approximately 500 ml of n-heptane under nitrogen. The solution was filtered hot, the filtrate concentrated under vacuum to 250 ml and allowed to cool to room temperature. The solids were collected. Phosphorus NMR analysis revealed 67 area percent 2,2'-ethylidenebis(4,6-di-tert-butylphenyl) chlorophosphate, 23 percent 2,2'-ethylidenebis(4,6-di-tert-butylphenyl) hydrogenphosphonate and 8.0 percent unknown impurities.

A 1.15 g portion of this product was combined with 20 ml of toluene in a polyethylene bottle under an atmosphere of nitrogen. The reaction vessel was cooled to 10°C in an ice bath. A 2 to 3 ml portion of anhydrous hydrogen fluoride was added to the mixture. The container was closed and stirred for 15 minutes. The bottle was then vented and allowed to warm under a stream of nitrogen to ambient temperature. After 1 hour, nitrogen was bubbled through the solution to remove residual hydrogen fluoride. Analysis by phosphorus NMR of the crude reaction mixture revealed an absence of 2,2'-ethylidenebis(4,6-di-tert-butylphenyl) fluorophosphite as well as 2,2'-ethylidenebis(4,6-di-tert-butylphenyl) chlorophosphite. Gas chromatography revealed several peaks with shorter retention times relative to the chlorophosphite and fluorophosphite compounds.

## Claims

1. A process for exchanging halogen bonded to the phosphorus atom with fluorine to prepare a fluorophosphorus product from a phosphorus compound of formula (I) 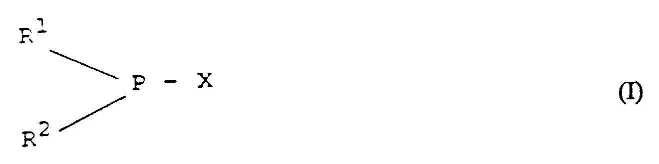 wherein
X is Cl, Br or I;
R¹ is selected from the group consisting of substituted or unsubstituted alkoxy, thioalkoxy, aryloxy, thioaryloxy, cycloalkoxy, alkenoxy and arylalkoxy; and
R² is X or is selected from the same groups as R¹ or is a group which, together with R¹, forms a substituted or unsubstituted divalent hydrocarbon group bonded at each end through oxygen or sulfur to the phosphorus atom; wherein anhydrous hydrogen fluoride is added to a solution of compound (I) in an inert solvent at a rate such that the amount of unreacted hydrogen fluoride present in the reaction mixture does not exceed 0.2 mol per mol of compound (I).

2. The process according to claim 1 wherein X in the formula (I) is Cl.

3. The process according to claim 1 or claim 2 wherein said inert solvent is an aromatic hydrocarbon having a normal boiling point in the range of 80 to 176 °C.

4. The process according to claim 3 wherein said inert solvent is xylene.

5. The process according to any of the preceding claims wherein R¹ and R² jointly form a divalent hydrocarbon group having the structure 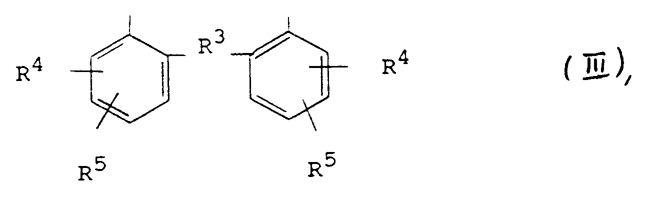 in which R³ is a methylene or alkylidene bridge or is a direct ortho-ortho bond between the aromatic rings; R⁴ and R⁵ are independently selected from alkyl, cycloalkyl and aralkyl groups, and the unsubstituted bond on each aromatic ring is bonded through oxygen to the phosphorus atom.

6. The process according to claim 5 wherein said hydrocarbon group has the structure 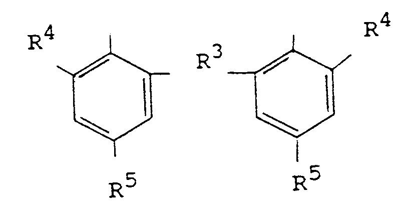 in which R⁴ and R⁵ are alkyl groups.

7. The process according to claim 6 wherein said hydrocarbon has the structure as in claim 6 in which R⁴ and R⁵ are tert-butyl groups, and R³ is an ethylidene bridge.

## Patentansprüche

1. Verfahren zum Austausch des an Phosphor gebundenen Halogens mit Fluor zur Herstellung eines Fluorphosphorprodukts der Formel (I) 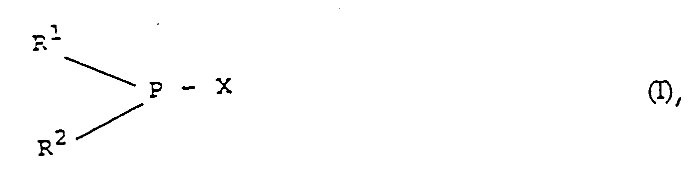 in der X Cl, Br oder I ist;
R¹ aus der aus substituiertem oder unsubstituiertem Alkoxy, Thioalkoxy, Aryloxy, Thioaryloxy, Cycloalkoxy, Alkenoxy und Arylalkoxy bestehenden Gruppe ausgewählt ist;
R² X ist oder aus den gleichen Gruppen wie R¹ ausgewählt ist oder eine Gruppe ist, die zusammen mit R¹ eine substituierte oder unsubstituierte zweiwertige Kohlenwasserstoffgruppe bildet, die an jedem Ende durch Sauerstoff oder Schwefel an das Phosphoratom gebunden ist;
bei dem wasserfreies Wasserstofffluorid einer Lösung der Verbindung (I) in einem inerten Lösungsmittel mit einer solchen Geschwindigkeit zugesetzt wird, daß die Menge des in der Reaktionsmischung vorhandenen nicht umgesetzten Wasserstofffluorids 0,2 Mol pro Mol der Verbindung (I) nicht übersteigt.

2. Verfahren nach Anspruch 1, bei dem X in der Formel (I) Cl ist.

3. Verfahren nach Anspruch 1 oder 2, bei dem das inerte Lösungsmittel ein aromatischer Kohlenwasserstoff mit einem normalen Siedepunkt im Bereich von 80 bis 176°C ist.

4. Verfahren nach Anspruch 3, bei dem das inerte Lösungsmittel Xylol ist.

5. Verfahren nach einem der vorstehenden Ansprüche, in dem R¹ und R² zusammen eine zweiwertige Kohlenwasserstoffgruppe mit der Struktur 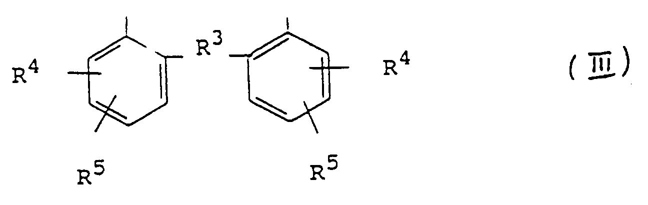 bilden, in der R³ eine Methylen- oder Alkylenbrücke oder eine direkte ortho-ortho-Verbindung zwischen den aromatischen Ringen ist, R⁴ und R⁵ unabhängig voneinander aus Alkyl-, Cycloalkyl- und Aralkylgruppen ausgewählt sind und die unsubstituierte Bindung auf jedem aromatischen Ring durch Sauerstoff an das Phosphoratom gebunden ist.

6. Verfahren nach Anspruch 5, bei dem die Kohlenwasserstoffgruppe die Struktur 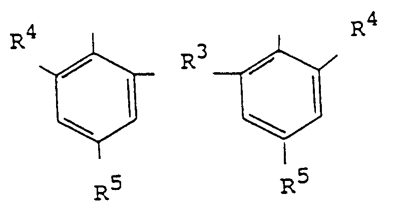 aufweist, in der R⁴ und R⁵ Alkylgruppen sind.

7. Verfahren nach Anspruch 6, bei dem der Kohlenwasserstoff die Struktur wie in Anspruch 6 hat, in dem R⁴ und R⁵ tert-Butylgruppen sind und R³ eine Ethylenbrücke ist.

## Revendications

1. Procédé pour échanger un halogène lié à l'atome de phosphore contre du fluor pour préparer un produit fluorophosphoré à partir d'un composé phosphoré de formule (I) 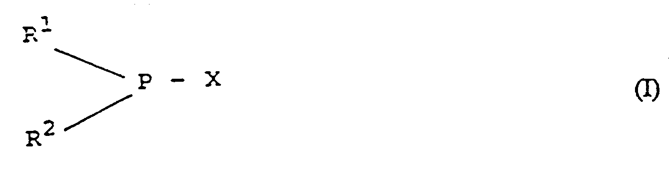 dans laquelle
X représente Cl, Br ou I ;
R¹ est choisi dans le groupe comprenant des restes, substitués ou non substitués alkoxy, thioalkoxy, aryloxy, thioaryloxy, cycloalkoxy, alcénoxy et arylalkoxy ; et
R² représente X ou est choisi dans les mêmes groupes que R¹ ou représente un groupe qui, conjointement avec R¹, forme un reste hydrocarboné divalent substitué ou non substitué lié à chaque extrémité à l'atome de phosphore par l'intermédiaire d'oxygène ou de soufre ;
dans lequel du fluorure d'hydrogène anhydre est ajouté à une solution de composé (I) dans un solvant inerte à une vitesse choisie de manière que la quantité de fluorure d'hydrogène n'ayant pas réagi qui est présente dans le mélange réactionnel ne dépasse pas 0,2 mole par mole de composé (I).

2. Procédé suivant la revendication 1, dans lequel X dans la formule (I) représente Cl.

3. Procédé suivant la revendication 1 ou la revendication 2, dans lequel le solvant inerte est un hydrocarbure aromatique ayant un point d'ébullition, dans des conditions normales, dans la plage de 80 à 176°C.

4. Procédé suivant la revendication 3, dans lequel le solvant inerte est le xylène.

5. Procédé suivant l'une quelconque des revendications précédentes, dans lequel R¹ et R² forment conjointement un groupe hydrocarboné divalent répondant à la formule 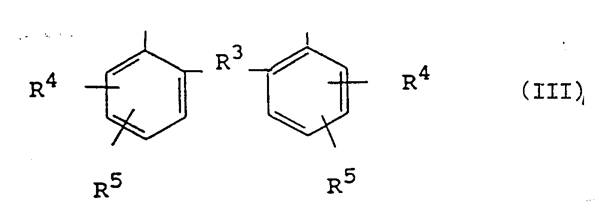 dans laquelle R³ est un pont méthylène ou alkylidène ou est une liaison directe ortho-ortho entre les noyaux aromatiques ; R⁴ et R⁵ sont choisis, indépendamment, entre des groupes alkyle, cycloalkyle et aralkyle, et la liaison non substituée sur chaque noyau aromatique est liée à l'atome de phosphore par l'intermédiaire d'oxygène.

6. Procédé suivant la revendication 5, dans lequel le groupe hydrocarboné répond à la formule 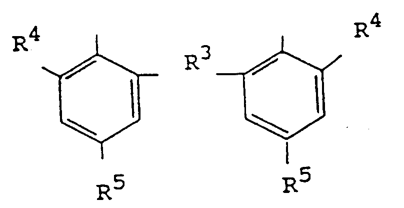 dans laquelle R⁴ et R⁵ sont des groupes alkyle.

7. Procédé suivant la revendication 6, dans lequel l'hydrocarbure répond à la formule donnée dans la revendication 6 dans laquelle R⁴ et R⁵ sont des groupes tertio-butyle et R³ est un pont éthylidène.
